# EUROPEAN PATENT APPLICATION

(11) **EP 4 498 219 A1**
(43) Date of publication of application: **29.01.2025**
(21) Application number: 24190830.0
(22) Date of filing: 25.07.2024
(51) Int. Cl.: G06F 3/04847, G06F 3/0488

(54) **INFORMATION PROCESSING APPARATUS, CONTROL METHOD OF INFORMATION PROCESSING APPARATUS, PROGRAM, AND READABLE STORAGE MEDIUM**

(30) Priority: 28.07.2023 JP 2023123170
(71) Applicant: CANON KABUSHIKI KAISHA, Tokyo 146-8501 (JP)
(72) Inventor: ANDO, Takayasu, Tokyo, 146-8501 (JP)
(74) Representative: TBK

(57) **Abstract**

An information processing apparatus performs control such that an area having a predetermined shape is displayed on a touch-screen. The information processing apparatus detects a touch-slide operation, which is a sliding operation performed while the area having the predetermined shape is being touched. The information processing apparatus changes a setting value of a setting item assigned to the area having the predetermined shape in accordance with the touch-slide operation. The information processing apparatus 1) performs control such that a vibration in accordance with the touch-slide operation is generated in case where a first setting item is assigned to the area having the predetermined shape and 2) performs control such that the vibration in accordance with the touch-slide operation is not generated in case where a second setting item, which is different from the first setting item, is assigned to the area having the predetermined shape.

## Description

### BACKGROUND OF THE INVENTION

### Field of the Invention

The present invention relates to an information processing apparatus and a control method of the information processing apparatus.

### Description of the Related Art

In recent years, imaging apparatuses such as digital cameras are provided with a wireless communication function and a wired connection function. When an imaging apparatus is connected to an information terminal (a smartphone, a tablet, or the like) via wireless communication or wired connection, the information terminal can remotely control the imaging apparatus by using an application installed in the information terminal.

A touch operation is a mainstream operation used for information terminals. A touch operation unit (a button, a slide bar, a wheel, or the like) is displayed on a screen for a user to operate. When the imaging apparatus is remotely controlled, by operating the touch operation unit displayed on the screen of the information terminal, the imaging apparatus can be controlled (for example, the settings of the imaging apparatus can be changed).

However, unlike the operation on a physical button, the touch operation performed on the screen lacks feedback to the operator. Therefore, the operator may not obtain an expected operation result.

With the foregoing in view, a method for giving feedback in response to the touch operation has been proposed. Japanese Patent Application Laid-open No. 2018-128741 discloses that feedback indicating that sliding performed in a touch-slide operation (a sliding operation with a touching state maintained) has reached a target point is provided to the operator through a change of vibration.

When the setting is changed by the touch-slide operation, it is useful for the sake of improving operability to provide feedback using vibration at the timing when the setting is changed, by using the technique of Japanese Patent Application Laid-open No. 2018-128741. However, for example, when a zooming operation of the imaging apparatus is performed, the setting continuously changes (changes occur constantly during the operation), and if the feedback using vibration is provided, vibration occurs constantly during the operation. Thus, occurrence of unnecessary vibration deteriorates the operability of the touch-slide operation.

### SUMMARY OF THE INVENTION

According to the present invention, operability is improved when the setting is changed by a sliding operation with a touching state maintained.

The present invention in its an aspect provides an information processing apparatus as specified in claims 1 to 8.

The present invention in its an aspect provides a control method of an information apparatus method as specified in claim 9. The present invention in its an aspect provides a program as specified in claim 10. The present invention in its an aspect provides a computer readable storage medium as specified in claim 11.

Further features of the present invention will become apparent from the following description of exemplary embodiments with reference to the attached drawings.

### BRIEF DESCRIPTION OF THE DRAWINGS

FIGS. 1A and 1B illustrate an information processing system;
FIG. 2 is a configuration diagram of an imaging apparatus according to Embodiment 1;
FIG. 3 is a configuration diagram of an information terminal according to Embodiment 1;
FIGS. 4A and 4B are diagrams for describing a setting change UI according to Embodiment 1;
FIG. 5 is a diagram for describing vibration feedback according to Embodiment 1;
FIG. 6 is a diagram for describing vibration feedback according to Embodiment 1; and
FIG. 7 is a flowchart of a switching process of the vibration feedback according to Embodiment 1.

### DESCRIPTION OF THE EMBODIMENTS

Hereinafter, embodiments of the present invention will be described in detail with reference to the accompanying drawings. The embodiments described below are examples of a method for realizing the present invention, and may be appropriately modified or changed depending on the configuration of an apparatus to which the present invention is applied or various conditions. Further, the embodiments may be combined as appropriate.

### Embodiment 1

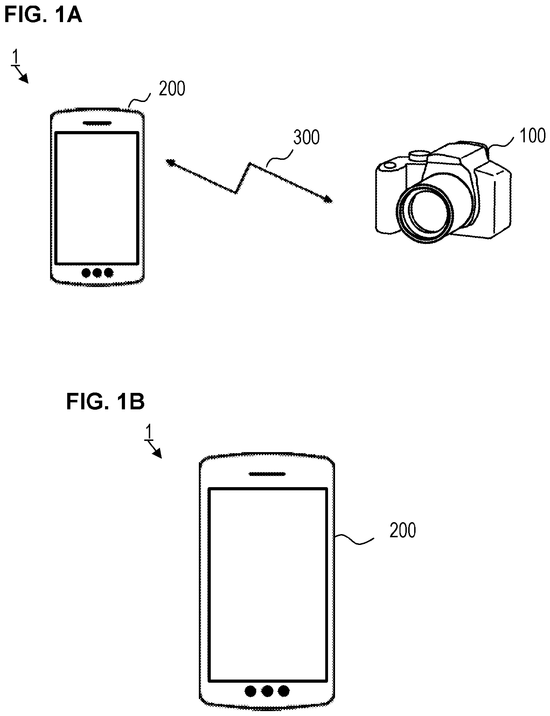

FIG. 1A illustrates an information processing system 1 according to Embodiment 1. The information processing system 1 includes an imaging apparatus 100 and an information terminal 200. The imaging apparatus 100 is, for example, an electronic apparatus (information processing apparatus) such as a digital camera. The information terminal 200 is, for example, an electronic apparatus (information processing apparatus) such as a smartphone, a tablet, a digital camera (imaging apparatus), or a computer. The imaging apparatus 100 is connected to the information terminal 200 via communication 300. The communication 300 may be wireless communication or wired communication.

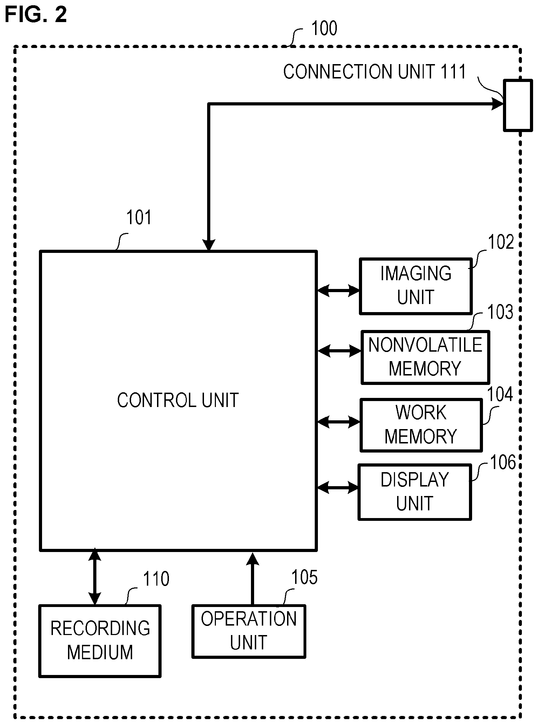

FIG. 2 is a block diagram illustrating an example of a configuration of the imaging apparatus 100. The imaging apparatus 100 includes a control unit 101, an imaging unit 102, a nonvolatile memory 103, a work memory 104, an operation unit 105, a display unit 106, a recording medium 110, and a connection unit 111.

The control unit 101 controls each unit of the imaging apparatus 100 in accordance with an input signal or a program. Alternatively, instead of the control unit 101 controlling the entire imaging apparatus 100, a plurality of pieces of hardware may share processing to control the entire imaging apparatus 100.

The imaging unit 102 acquires an image (hereinafter, referred to as a "camera image") by capturing a subject (real space). The imaging unit 102 includes a lens. The imaging unit 102 converts the image formed by focusing subject light using the lens into electrical signals. The imaging unit 102 outputs, as a camera image, digital data obtained by performing noise reduction processing or the like on the electrical signals. After the camera image is stored in a buffer memory, a predetermined calculation is performed by the control unit 101, and the camera image is recorded in the recording medium 110.

The nonvolatile memory 103 is an electrically erasable and recordable nonvolatile memory. The nonvolatile memory 103 stores a program and the like executed by the control unit 101.

The work memory 104 is used as a buffer memory that temporarily holds the camera image acquired by the imaging unit 102. Further, the work memory 104 is used as a memory for image display by the display unit 106, a work area of the control unit 101, etc.

The operation unit 105 receives an instruction to the imaging apparatus 100 from a user. The operation unit 105 includes, for example, a power button through which the user instructs the imaging apparatus 100 to turn on/off the power. The operation unit 105 includes operation members such as a release switch for instructing shooting and a playback button for instructing playback of an image. The operation unit 105 also includes a touch-screen formed on the display unit 106.

The release switch includes a switch SW1 and a switch SW2. When the release switch is in a so-called "half-pressed" state, the switch SW1 is turned on. In this state, the operation unit 105 receives instructions to perform processing for shooting preparation (AF (autofocus) processing, AE (automatic exposure) processing, AWB (auto white balance) processing, EF (flash pre-emission) processing, and the like). When the release switch is in a so-called "fully-pressed" state, the switch SW2 is turned on. In this state, the operation unit 105 receives an instruction to perform shooting.

The display unit 106 displays a viewfinder image used for shooting, a camera image, characters for interactive operations, and the like. The display unit 106 is not necessarily built in the imaging apparatus 100 as long as the imaging apparatus 100 can be connected to the internal or external display unit 106 and can control the display of the display unit 106.

The recording medium 110 records a camera image. The recording medium 110 may be detachable from the imaging apparatus 100 or may be built in the imaging apparatus 100. That is, the imaging apparatus 100 at least needs to be able to access the recording medium 110.

The connection unit 111 is an interface for connecting to an external apparatus (such as the information terminal 200). The imaging apparatus 100 can exchange data with the external apparatus via the connection unit 111. The connection unit 111 includes an interface for wirelessly communicating with the external apparatus. The control unit 101 realizes wireless communication with the external apparatus by controlling the connection unit 111.

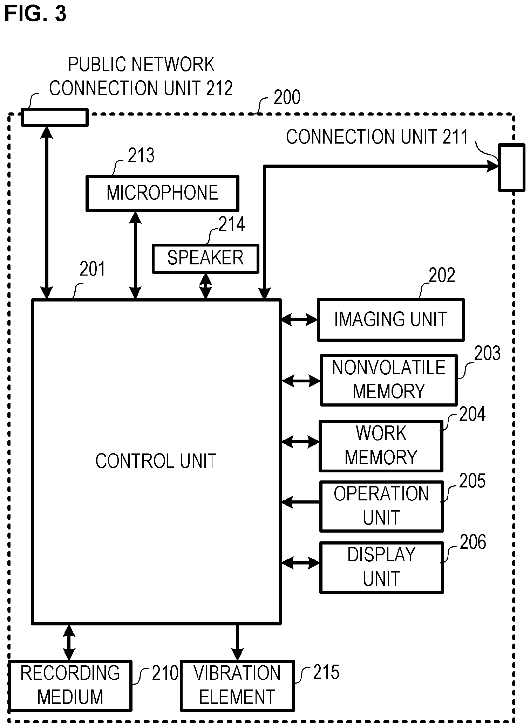

FIG. 3 is a block diagram illustrating an example of a configuration of the information terminal 200. The information terminal 200 includes a control unit 201, an imaging unit 202, a nonvolatile memory 203, a work memory 204, an operation unit 205, a display unit 206, a recording medium 210, a connection unit 211, a public network connection unit 212, a microphone 213, a speaker 214, and a vibration element 215.

The control unit 201 controls each unit of the information terminal 200 in accordance with an input signal or a program. Note that, instead of the control unit 201 controlling the entire information terminal 200, a plurality of pieces of hardware may share processing to control the entire information terminal 200.

The imaging unit 202 acquires an image (hereinafter, referred to as a "terminal image") by capturing a subject (real space). The imaging unit 202 includes a lens. The imaging unit 202 converts the image formed by focusing subject light using the lens into electrical signals. The imaging unit 202 acquires, as a terminal image, digital data obtained by performing noise reduction processing or the like on the electrical signals. After the terminal image is stored in a buffer memory, a predetermined calculation is performed by the control unit 201, and the terminal image is recorded in the recording medium 210.

The nonvolatile memory 203 is an electrically erasable and recordable nonvolatile memory. The nonvolatile memory 203 stores an OS (operating system), which is basic software executed by the control unit 201, various programs, and the like.

In Embodiment 1, the nonvolatile memory 203 holds a program for communicating with the imaging apparatus 100. This program is installed in the information terminal 200 as a camera communication application. The processing performed by the information terminal 200 in Embodiment 1 is realized by the program provided by the camera communication application. The camera communication application includes a program for using basic functions (for example, a wireless communication function and a vibration function) of the OS installed in the information terminal 200. The camera communication application also has a "remote shooting function with which the information terminal 200 performs shooting by remotely controlling the imaging apparatus 100 while displaying a camera image, which is a live view image acquired from the imaging apparatus 100, on the information terminal 200". Furthermore, the camera communication application has a setting change function of remotely changing the setting of the imaging apparatus 100. Alternatively, the OS of the information terminal 200 may include a program for realizing the processing in Embodiment 1.

The work memory 204 is used as a buffer memory that temporarily stores the terminal image. Further, the work memory 204 is used as a memory for image display by the display unit 206, a work area of the control unit 201, and the like.

The operation unit 205 is used for receiving an instruction to the information terminal 200 from a user. The operation unit 205 includes, for example, a power button for instructing to turn on/off the power of the information terminal 200. The operation unit 205 also includes an operation member such as a touch-screen formed on the display unit 206.

The display unit 206 displays a terminal image, a camera image, characters for interactive operations, and the like. The display unit 206 is not necessarily built in the information terminal 200 as long as the information terminal 200 can be connected to the display unit 206 and can control the display of the display unit 206.

The recording medium 210 records a terminal image output from the imaging unit 202 and a camera image received from the imaging apparatus 100. The recording medium 210 may be detachable from the information terminal 200 or may be built in the information terminal 200. That is, the information terminal 200 at least needs to be able to access the recording medium 210.

The connection unit 211 is an interface for connecting to an external apparatus (such as the imaging apparatus 100). The information terminal 200 can exchange data with the external apparatus via the connection unit 211. The connection unit 211 includes an interface for wirelessly communicating with the external apparatus. The control unit 201 realizes wireless communication with the external apparatus by controlling the connection unit 211.

The public network connection unit 212 is an interface used when communication using public wireless communication is performed. The information terminal 200 can make a call and perform data communication through the public network connection unit 212. During a call, the control unit 201 acquires ambient sound by the microphone 213 and emits (outputs) sound by the speaker 214.

The vibration element 215 vibrates based on a driving voltage output from the control unit 201. This causes the information terminal 200 itself to vibrate. In Embodiment 1, the vibration element 215 is a notification unit that notifies a change of the setting value of a specific setting item by vibrating the information terminal 200.

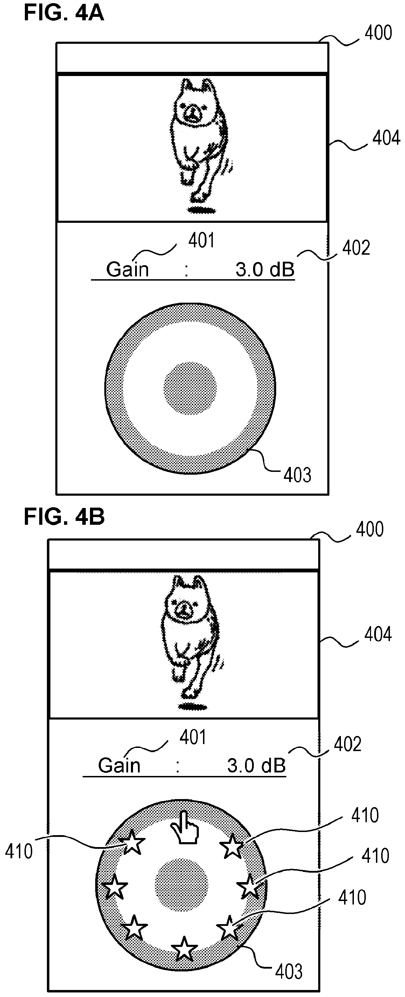

Hereinafter, "an example of changing the setting (setting relating to shooting) of the imaging apparatus 100 by using a setting change UI (user interface)" will be described with reference to FIG. 4A. FIG. 4A illustrates an example of a setting change UI 400 according to Embodiment 1.

The setting change UI 400 is displayed on the display unit 206 of the information terminal 200 by the application installed in the information terminal 200 or the program included in the OS of the information terminal 200.

A setting item 401 is a setting item whose setting value (setting) can be changed through the setting change UI 400. In the example illustrated in FIG. 4A, the setting item 401 indicates a setting item of a gain (a setting value for adjusting brightness).

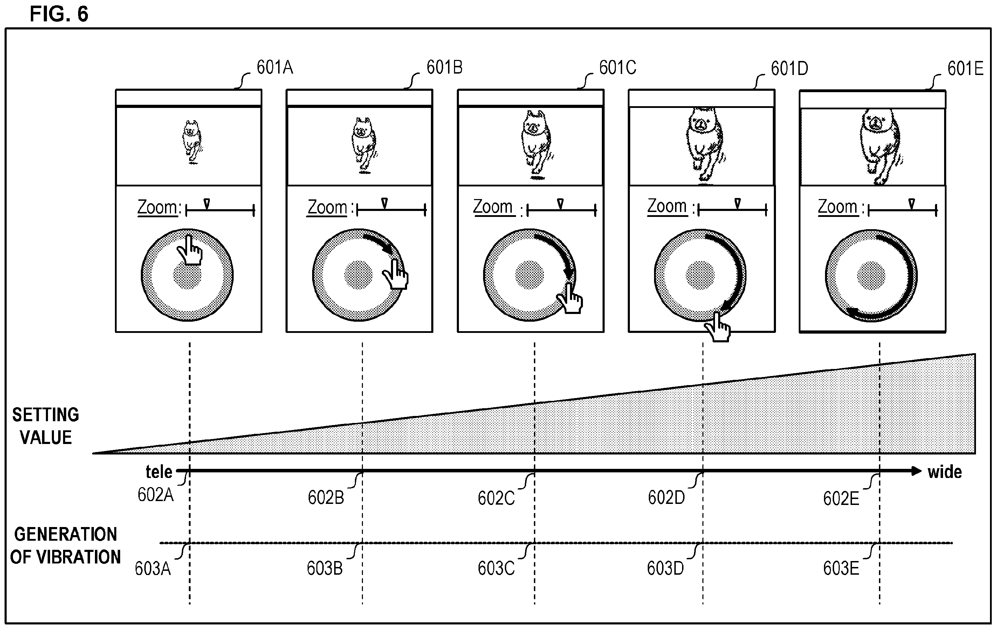

A current setting 402 indicates a current setting value (setting) of the setting item 401. There may be a case where the setting item 401 cannot be expressed by a numerical value depending on the content. In this case, for example, the current setting 402 may be displayed by using a bar, instead of using a numerical value (see FIG. 6). In Embodiment 1, the current setting 402 is acquired from the imaging apparatus 100 via the connection unit 111 and the connection unit 211.

A touch operation unit 403 is an area (touch area) operated by the user to change the current setting 402. The touch operation unit 403 is, for example, an operation unit having a shape of a wheel or a slide bar. When the user operates the touch operation unit 403, the operation unit 205 (touch-screen) detects (senses) this operation. When the control unit 201 determines that the detected operation is an operation for changing the setting, the control unit 201 changes the current setting 402. Further, the control unit 201 notifies the imaging apparatus 100 of the current setting 402 (the setting value in accordance with the setting change operation) via the connection unit 211 and the connection unit 111. The control unit 101 of the imaging apparatus 100 applies the current setting 402 to the imaging apparatus 100 and stores the current setting 402 in the nonvolatile memory 103 or the work memory 104. In this way, the change of the setting value in accordance with the setting change operation is realized.

In the above processing, the control unit 201 determines whether or not to provide the user with feedback (notification) about the setting change based on the content of the setting item 401. If it is determined that the feedback about the setting change is provided to the user, the control unit 201 causes the vibration element 215 to vibrate.

An image 404 is a camera image (live view image) acquired by the imaging unit 102. The display mode or the image quality of the image 404 is controlled in accordance with the setting value depending on the content of the setting item 401. The image 404 may not be displayed depending on the content of the setting item 401.

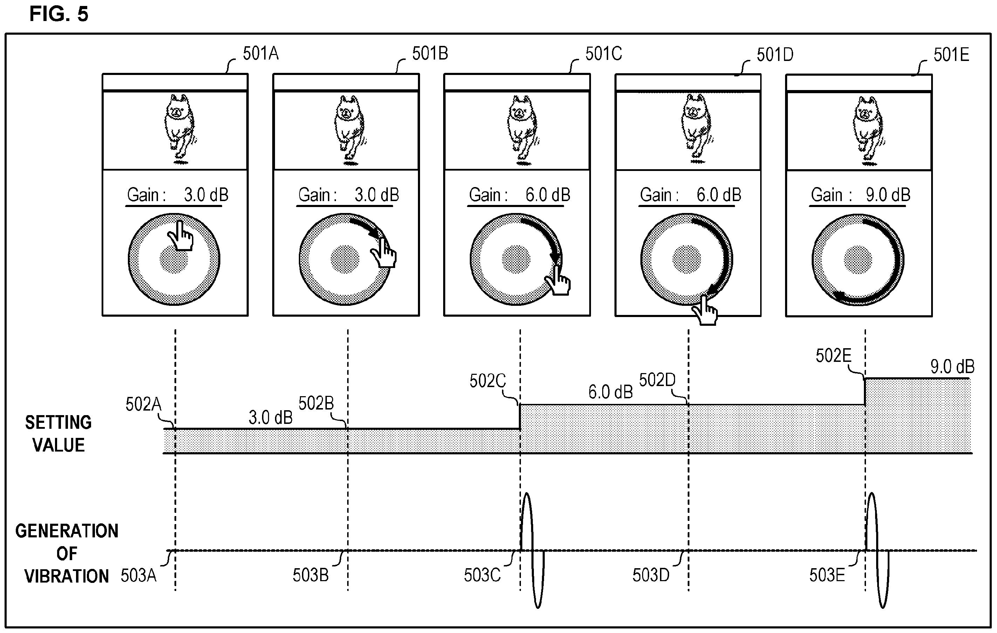

FIG. 5 is a diagram illustrating examples of a setting change operation with feedback using vibration (hereinafter, referred to as "vibration feedback") according to Embodiment 1.

Display surfaces 501A to 501E indicate the states of the display surfaces (setting change UIs 400) of the display unit 206 in chronological order when the touch operation unit is operated (when the touch-slide operation is performed). Setting values 502A to 502E indicate setting values in accordance with touch operations.

Presence/absence of vibration feedback 503A to 503E indicate the presence or absence of vibration feedback associated with changes in the setting value.

On the display surface 501B, the amount of the operation performed on the touch operation unit does not reach the operation amount (= threshold) that leads to the setting change. Therefore, the setting value 502B is not changed from the setting value 502A. Next, as indicated by the presence/absence of the vibration feedback 503B, the vibration feedback is not performed.

On the display surface 501C, the amount of the operation performed on the touch operation unit reaches the operation amount that leads to the setting change. Therefore, the setting value 502C is changed from the setting value 502B. Further, as indicated by the presence/absence of the vibration feedback 503C, the vibration feedback is performed.

In FIG. 5, the setting item whose setting value is changed is the gain setting of the imaging apparatus 100 (camera). In the case of setting item whose setting value changes discontinuously (the setting value changes one step at a time in accordance with a specific amount of slide operation), such as the gain setting, the exposure correction, the frame rate, or the shutter speed, the vibration feedback is generated. This allows the user to easily grasp the timing at which the setting value changes so that the user can perform the setting change operation more intuitively.

FIG. 6 is a diagram illustrating an example of a setting change operation without vibration feedback according to Embodiment 1.

Display surfaces 601A to 601E indicate the states of the display surfaces (setting change UIs 400) of the display unit 206 in chronological order when the touch operation unit is operated (when the touch-slide operation is performed). Setting values 602A to 602E indicate setting values in accordance with touch operations.

Presence/absence of vibration feedback 603A to 603E indicate the presence or absence of vibration feedback associated with changes in the setting value.

On the display surface 601B, the setting value 602B is changed from the setting value 602A by the operation performed on the touch operation unit. However, as illustrated in the presence/absence of vibration feedback 603B, vibration feedback is not performed.

On the display surface 601C, too, the setting value 602C is changed from the setting value 602B by the operation performed on the touch operation unit. However, as illustrates in the presence/absence of vibration feedback 603C, vibration feedback is not performed. That is, when the setting value is changed as illustrated in FIG. 6, the vibration feedback is not performed in any case.

In FIG. 6, the setting item whose setting value is changed is the zoom setting of the camera. In the case of setting item whose setting value changes continuously (the setting value constantly changes during the operation regardless of the amount of slide operation), such as the zoom setting or the focus setting, vibration is constantly generated during the operation when vibration feedback is performed. As a result, unnecessary vibration (notification) may be generated and hinder the operation. Further, since the vibration feedback is not performed, the user can intuitively feel that the setting value is continuously changed, through experiencing an operational feeling different from the case where the setting value of the setting item using the vibration feedback is changed.

Even when the change in the setting value in accordance with the operation is continuous, the vibration feedback may be performed only at a specific point, not for each change in the setting value. For example, in the focus setting of the camera, the setting value (focal length) continuously changes. In this case, the vibration feedback is performed only when the setting value reaches the value corresponding to an in-focus point by the operation performed on the touch operation unit. In this way, the user can easily perform focusing. The "continuous change in the setting value" includes a discontinuous change in a very small unit, which is felt to be continuous by a human, even if the change is not strictly continuous.

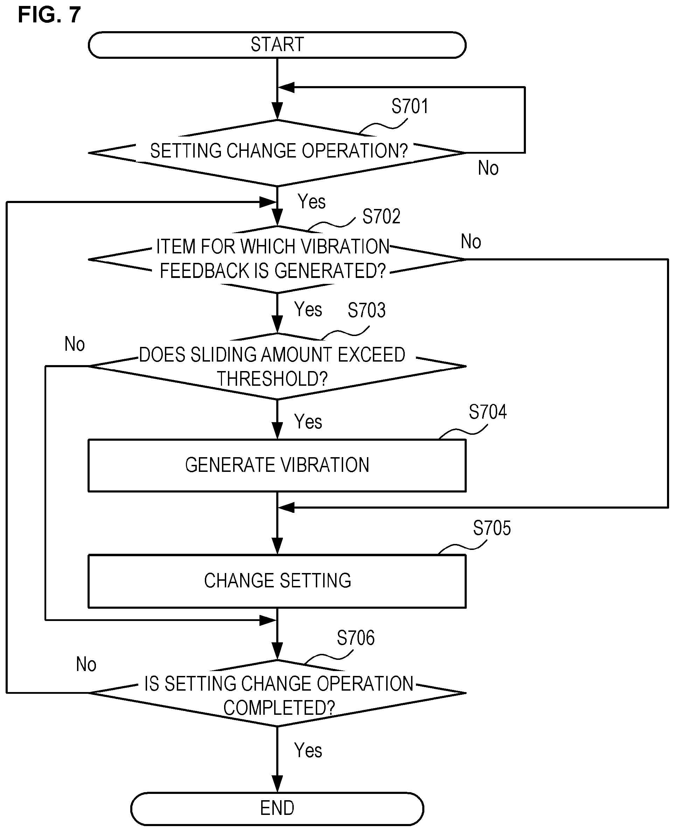

A process for switching execution of vibration feedback in accordance with the content of a setting item will be described with reference to a flowchart in FIG. 7. The present flowchart illustrates processing content performed by the information terminal 200 in accordance with a program. Hereinafter, a setting item of the imaging apparatus 100 of which the user changes a setting value (setting) is referred to as a "target item".

In step S701, the control unit 201 determines whether or not "a sliding operation (touch-slide operation) performed while the user keeps touching the operation unit 205 is performed for changing the setting value " (hereinafter, referred to as "setting change operation") on the touch operation unit. If it is determined that the setting change operation has been performed, the processing proceeds to step S702. If it is determined that the setting change operation has not been performed, the processing in step S701 is repeated.

In step S702, the control unit 201 determines whether or not the target item is an item for which vibration feedback is generated (whether or not the change in the setting value in accordance with the operation is discontinuous). If it is determined that the target item is an item for which vibration feedback is generated, the processing proceeds to step S703. If it is determined that the target item is not an item for which vibration feedback is generated, the processing proceeds to step S705.

Specifically, for example, when the control unit 201 determines that the target item is an item for which vibration feedback is generated, the control unit 201 may display a plurality of vibration points 410 as illustrated in FIG. 4B on the touch operation unit. On the other hand, when the control unit 201 determines that the target item is not an item for which vibration feedback is generated, the control unit 201 does not display the plurality of vibration points 410 as illustrated in FIG. 4B on the touch operation unit. The vibration points 410 are display items each indicating that vibration feedback is performed (= the setting value of the target item is changed) when (each time) the touch position of the user reaches the individual vibration point 410. The positions at which the vibration points 410 are displayed are calculated based on the start position of the touch of the user and a threshold in step S703, which will be described below. Specifically, two adjacent vibration points 410 are separated from each other by an amount corresponding to the threshold, and the start position of the touch and the vibration point 410 adjacent to the start position are separated from each other by an amount corresponding to the threshold. In this way, the user can visually grasp the amount of slide operation to be performed to change the setting value.

In step S703, the control unit 201 determines whether or not the sliding amount of the setting change operation exceeds "an amount that leads to changing the setting value of the target item" (= the threshold). If it is determined that the sliding amount exceeds the threshold, the processing proceeds to step S704. If it is determined that the sliding amount is equal to or less than the threshold, the processing proceeds to step S706.

In step S704, the control unit 201 causes the vibration element 215 to vibrate to perform vibration feedback. That is, the control unit 201 notifies the user that the setting value of the target item is changed by causing the information terminal 200 to be vibrated by the vibration element 215.

In step S705, the control unit 201 changes the setting value of the target item in accordance with the setting change operation. Specifically, the control unit 201 notifies the imaging apparatus 100 of the setting value (the setting value of the target item) in accordance with the setting change operation. Through this notification, the control unit 201 controls the control unit 101 of the imaging apparatus 100 such that the setting value of the target item is applied to the imaging apparatus 100 and stored in the nonvolatile memory 203 or the work memory 204.

In step S706, the control unit 201 determines whether or not the setting change operation performed on the operation unit 205 is completed. For example, when the state in which the hand is touching the operation unit 205 is ended, the control unit 201 determines that the setting change operation is completed. If it is determined that the setting change operation is completed, the processing of the present flowchart ends. If it is determined that the setting change operation is not completed, the processing returns to step S702.

According to Embodiment 1, when the setting value that discontinuously changes in accordance with the operation is changed, the vibration feedback is provided to the user. On the other hand, when the setting value that continuously changes in accordance with the operation is changed, the vibration feedback is not provided to the user. Therefore, the user can clearly recognize whether or not the setting value has been changed for the setting item whose setting value does not change unless a certain amount of operation is performed. When the vibration feedback is not provided to the user, the user can clearly recognize that the setting item is a setting item whose setting value continuously changes in accordance with the operation. As a result, in a case where the setting value is changed through the touch-slide operation, the user operability is improved.

In the above description, the touch operation unit 403 is displayed on the display unit 206. However, the touch operation unit 403 may be a physical operation member provided independently from the display unit 206 as long as the touch operation unit 403 can receive a touch-slide operation. For example, the touch operation unit 403 may be a touch pad or a slide bar. Further, these notification methods may be combined.

In addition, while the change of the setting value is notified by causing the information terminal 200 to vibrate, the change of the setting value may be notified by causing the speaker 214 of the information terminal 200 to emit a sound. Alternatively, the change of the setting value may be notified by a change in the display mode, for example, blinking the display unit 206.

Furthermore, if the imaging apparatus 100 or the information terminal 200 is in a specific state, the control unit 201 does not need to cause the information terminal 200 to vibrate in any case. Specifically, even if it is determined in step S702 that the target item is an item for which vibration feedback is generated, the control unit 201 does not need to cause the information terminal 200 to vibrate in step S704 if the imaging apparatus 100 or the information terminal 200 is in a specific state. The specific state is, for example, a state in which the user has set the information terminal 200 not to notify the user of changes of the setting value. In addition, the specific state may be, for example, an imaging state, in which the imaging apparatus 100 is capturing (shooting) an image of a subject, a video playback state, in which the imaging apparatus 100 is reproducing video, or the like.

### Modification 1

The system 1 according to Embodiment 1 may be configured by the information terminal 200 alone as illustrated in FIG. 1B. That is, the information terminal 200 may include the configuration of the imaging apparatus 100. In this case, the information terminal 200 changes the setting value of a setting item of the information terminal 200 itself in response to the touch-slide operation.

The processing of the information terminal 200 may be realized by an installed application, or the OS of the information terminal 200 may include a program. When the processing is realized by the installed apparatus, the application includes a program for using basic functions of the OS.

According to the present invention, operability can be improved when the setting is changed by a sliding operation with a touching state maintained.

The present invention has thus been described based on the preferred embodiments. However, the present invention is not limited to these specific embodiments, and various modes within the scope not departing from the gist of the present invention are also included in the present invention. Some parts of the above-described embodiments may be combined as appropriate.

In the above description, "if A is equal to or more than B, the processing proceeds to step S1, and if A is smaller (lower) than B, the processing proceeds to step S2" may be read as "if A is larger (higher) than B, the processing proceeds to step S 1, and if A is equal to or less than B, the processing proceeds to S2". Conversely, "if A is larger (higher) than B, the processing proceeds to step S 1, and if A is equal to or less than B, the processing proceeds to step S2" may be read as "if A is equal to or more than B, the processing proceeds to step S1, and if A is smaller (lower) than B, the processing proceed to step S2". Thus, unless a contradiction arises, the expression "equal to or more than A" may be read as "larger (higher; longer; more) than A", and the expression "equal to or less than A" may be read as "smaller (lower; shorter; less) than A". In addition, the expression "larger (higher; longer; more) than A" may be read as "equal to or more than A", and the expression "smaller (lower; shorter; less) than A" may be read as "equal to or less than A".

Note that the above-described various types of control may be processing that is carried out by one piece of hardware (e.g., processor or circuit), or otherwise. Processing may be shared among a plurality of pieces of hardware (e.g., a plurality of processors, a plurality of circuits, or a combination of one or more processors and one or more circuits), thereby carrying out the control of the entire device.

Also, the above processor is a processor in the broad sense, and includes general-purpose processors and dedicated processors. Examples of general-purpose processors include a central processing unit (CPU), a micro processing unit (MPU), a digital signal processor (DSP), and so forth. Examples of dedicated processors include a graphics processing unit (GPU), an application-specific integrated circuit (ASIC), a programmable logic device (PLD), and so forth. Examples of PLDs include a field-programmable gate array (FPGA), a complex programmable logic device (CPLD), and so forth.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An information processing apparatus including a touch-screen capable of detecting a touch by a user, the information processing apparatus comprising:
a display control means configured to perform control such that an area having a predetermined shape is displayed on the touch-screen;
a detection means configured to detect a touch-slide operation, which is a sliding operation performed while the area having the predetermined shape is being touched;
a change means configured to change a setting value of a setting item assigned to the area having the predetermined shape, in accordance with the touch-slide operation; and
a vibration control means configured to 1) perform control such that a vibration in accordance with the touch-slide operation is generated in a case where a first setting item is assigned to the area having the predetermined shape and 2) perform control such that the vibration in accordance with the touch-slide operation is not generated in a case where a second setting item, which is different from the first setting item, is assigned to the area having the predetermined shape.

2. The information processing apparatus according to claim 1, wherein
a setting value of the first setting item is a value that discontinuously changes in accordance with the touch-slide operation, and
a setting value of the second setting item is a value that continuously changes in accordance with the touch-slide operation.

3. The information processing apparatus according to claim 1 or 2, comprising:
a connection means configured to connect to an imaging apparatus which performs image capturing; and
a notification means configured to notify the imaging apparatus of the setting value, changed by the change means, via the connection means, wherein
the first setting item is a setting item of gain or shutter speed, and
the second setting item is a setting item of zooming or focusing.

4. The information processing apparatus according to any one of claims 1 to 3, wherein:
the vibration control means performs control such that the vibration is generated in a case where an operation amount of the touch-slide operation reaches a predetermined operation amount that leads to a change of the setting value of the first setting item by the change means, and
the vibration control means performs control such that the vibration is not generated in a case where an operation amount of the touch-slide operation does not reach the predetermined operation amount.

5. The information processing apparatus according to any one of claims 1 to 4, further comprising an acquisition means configured to acquire data relating to a state of a specific apparatus connected to the information processing apparatus, wherein
the vibration control means performs control such that the vibration in accordance with the touch-slide operation is not generated in a case where the specific apparatus is in a specific state.

6. The information processing apparatus according to claim 5, wherein
the specific apparatus is an imaging apparatus that performs image capturing,
the setting value changed by the change means is notified to the imaging apparatus, and
the specific state is a state in which the imaging apparatus is performing image capturing.

7. The information processing apparatus according to claim 1, wherein the area having the predetermined shape is an area representing a wheel shape.

8. The information processing apparatus according to claim 1, wherein the area having the predetermined shape is an area representing a slide bar.

9. A control method of an information processing apparatus including a touch-screen capable of detecting a touch by a user, the control method comprising:
a display control step of performing control such that an area having a predetermined shape is displayed on the touch-screen;
a detection step of detecting a touch-slide operation, which is a sliding operation performed while the area having the predetermined shape is being touched;
a change step of changing a setting value of a setting item assigned to the area having the predetermined shape, in accordance with the touch-slide operation; and
a vibration control step of 1) performing control such that a vibration in accordance with the touch-slide operation is generated in a case where a first setting item is assigned to the area having the predetermined shape and 2) performing control such that the vibration in accordance with the touch-slide operation is not generated in a case where a second setting item, which is different from the first setting item, is assigned to the area having the predetermined shape.

10. A program that causes a computer to function as each means of the information processing apparatus according to any one of claims 1 to 8.

11. A computer-readable recording medium that records a program causing a computer to function as each means of the information processing apparatus according to any one of claims 1 to 8.
